# EUROPEAN PATENT SPECIFICATION

(11) **EP 0 732 249 B1**
(45) Date of publication and mention of the grant of the patent: **11.11.1998**
(21) Application number: 96301642.3
(22) Date of filing: 11.03.1996
(51) Int. Cl.: B62B 5/00

(54) **Device for the protection of plants**
Vorrichtung zum Schützen von Pflanzen
Dispositif pour la protection de plantes

(30) Priority: 11.03.1995 GB 9504967; 28.09.1995 GB 9519757
(43) Date of publication of application: 18.09.1996
(73) Proprietor: Baird, Douglas, Taynuilt, Argyll PA35 1HY (GB)
(72) Inventor: Baird, Douglas, Taynuilt, Argyll PA35 1HY (GB)
(74) Representative: Pacitti, Pierpaolo A.M.E.

(56) References cited:
- EP-A- 0 008 769
- EP-A- 0 376 857
- GB-A- 2 000 101
- US-A- 4 098 536
- US-A- 4 948 154

## Description

The present invention relates to a device for the protection of plants and especially, but not exclusively, to a device for the protection of plants for use in protecting plants during transportation on trolleys which are used for transporting plants both around nurseries and between establishments where plants are grown and retail outlets.

Plants are frequently transported on trolleys which comprise a rectangular base upon which are mounted casters or wheels and from which an upwardly extending shelf support member extends from each corner. The shelf support members are each provided with adjustable pegs, or with holes for receiving pegs, which allow shelves to be supported by the members. Typically, trolleys in use in nurseries do not include side walls running between the upwardly extending support members, nor members for reinforcement running between the tops of the members. A typical trolley might measure about 6 feet (1.8 metres) high by about 4.5 feet (1.4 metres) long by about 1.5 feet (0.45 metres) wide.

In use, plants are placed on shelves which are supported by each of the four support members. However, it is common for plants to extend outside the perimeter of the trolley and the portions of plants that do extend in this way are vulnerable to damage during transportation. It is therefore desirable to constrain the plants to within the perimeter of the trolley in order to prevent any damage to the plants during transportation.

Typically, the plants are constrained by wrapping a long sheet of plastics material around the trolley. Typically, such a sheet of plastics material is greater in length than the perimeter of the trolley and often several thicknesses of plastics material are used. Also, typically, a plastics material carrying an electrostatic charge is used which eliminates the need for additional fixing of the plastics material.

However, such a method of constraining plants to within the perimeter of the trolley has several associated problems. Firstly, the plastics material is unsuitable for use more than once and constraining plants in this way is therefore wasteful of resources and uneconomical. Secondly, it is time consuming since it is necessary to pass a large roll of plastics material around each trolley to be used, or to rotate the trolley whilst keeping the roll of material stationary. Thirdly, plastics materials of the type commonly used are air impermeable and therefore plants wrapped in such material are unable to breath. If plants remain constrained in this way for a considerable length of time this can cause considerable damage to the plants. There is also a tendency for two or more trolleys wrapped in plastic film to stick together.

Reusable covers for some types of trolleys and for purposes other than protecting plants thereon, have been used in the past. EP 0376857 discloses a security cover for a trolley which includes a substantially square top panel to cover the top of a panel and three side panels, permanently attached to each other, and to three edges of the top panel, to cover three of the four sides of a trolley. The free sides of two of the side panels can be fixed to the trolley uprights. A fourth side panel is attached to the free edge of the top panel and can be secured to the other side panels in order to close the fourth side of the trolley. Means to secure the fourth panel is provided. The disclosure of EP 0376857 forms the basis for the preamble of Claim 1.

According to the present invention there is provided a device for use in protecting plants in accordance with Claim 1.

Embodiments of the present invention will now be described by way of example with reference to the accompanying drawings in which:
Fig. 1 is a perspective view of a plant trolley of the type commonly used for the transportation of plants;
Fig. 2 is an end view of a plant trolley of the type illustrated in Fig. 1 with plants loaded thereon;
Fig.3 is a plan view of an embodiment of a device for the protection of plants in accordance with the present invention;
Fig. 4 is a perspective view of the device of Fig. 3 in an alternative position;
Fig. 5 is a perspective view of the device of Fig. 3 in use upon a trolley; and
Figs. 6a, 6b and 6c illustrate variants of a device for the protection of plants.

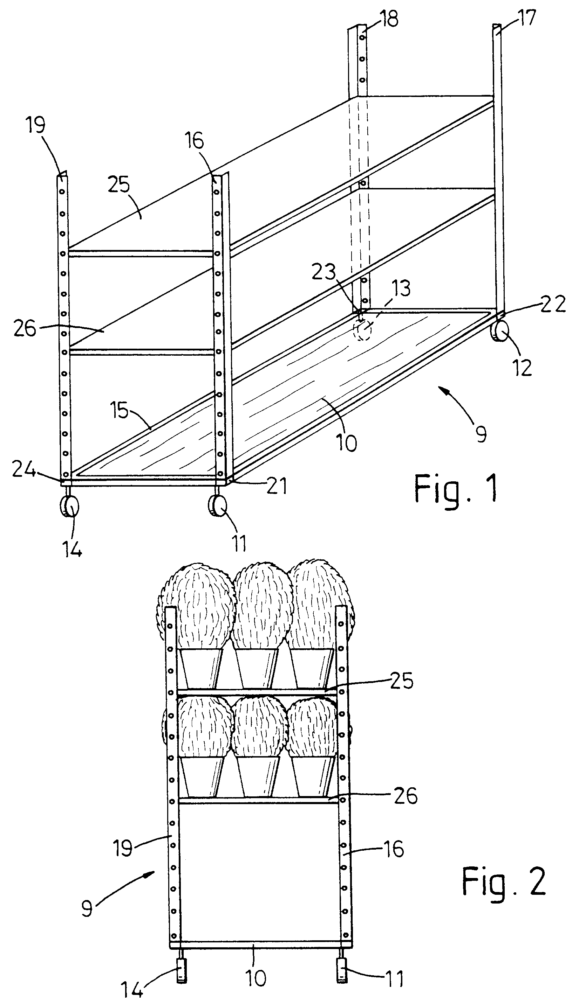

With reference to Fig. 1 and Fig. 2 a plant trolley, generally designated 9, of the type typically used for the transportation of plants, comprises a wooden base member 10 on which are mounted first, second, third and fourth wheel means 11, 12, 13, 14 in the form of wheels or casters. About the circumference of the wooden base member 10 there is provided a metal frame 15. The wheel means are provided adjacent each of the four corners of the rectangular base member 10 and may be attached to the underside of the base member 10 or to the metal frame 15. Extending upwardly from the respective corners of the wooden base member are first, second, third and fourth upwardly extending shelf support members 16, 17, 18, 19. The shelf support members 16, 17, 18, 19 are detachable from the wooden base member 10 and, in use, are retained in attachment to the base member 10 by their location in respective sockets 21, 22, 23, 24 provided respectively at or adjacent to the corners of the base member 10.

The shelf support members 16, 17, 18, 19 each comprise a length of angle iron with a substantially L-shaped horizontal cross section. Each shelf support member is provided with a number of vertically spaced apart apertures adapted to receive pegs upon which shelves 25, 26 may be supported at each of the corners of said shelves 25, 26.

In use, a number of shelves 25, 26 are supported at their respective corners by the shelf support members 16, 17, 18, 19 and each of the shelves 25, 26 is used to support a number of plants for transportation.

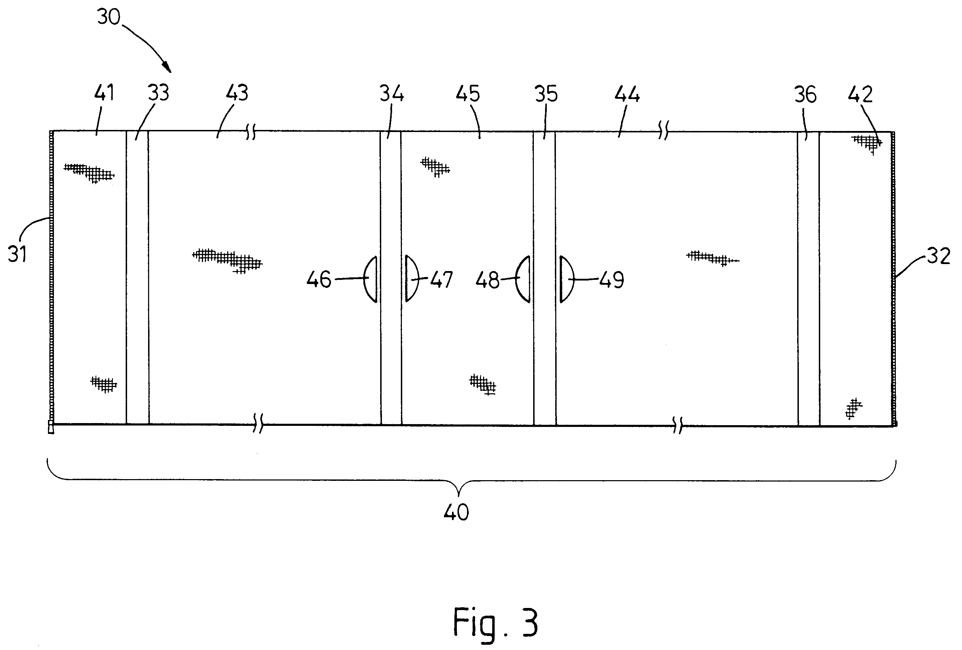

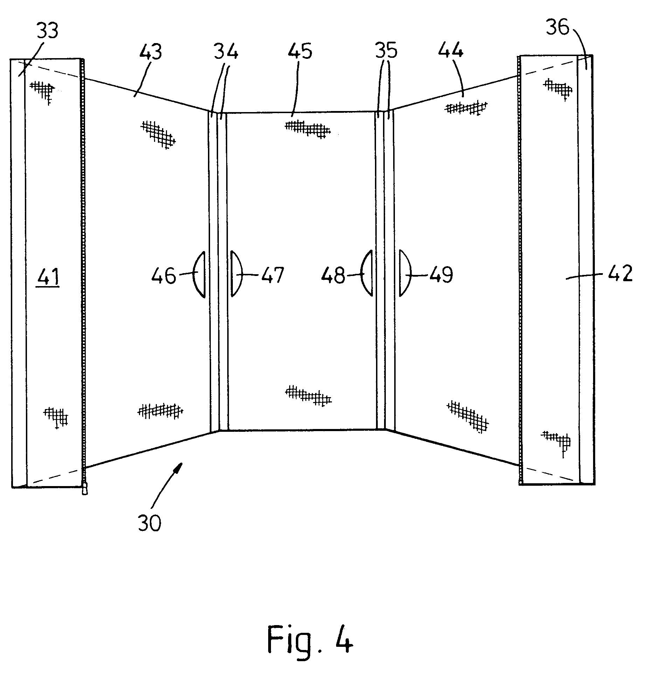

As illustrated in Figs. 3 to 5, an embodiment of a plant protection device in accordance with the present invention, generally designated 30, comprises a generally rectangular sheet of air permeable material 40 adapted to wrap around a trolley 9 by virtue of the length of the sheet of material 40 being substantially equivalent to the circumference of the base member 10 of the trolley 9 of the type illustrated in Fig. 1. Furthermore, the width of the sheet 40 is substantially equal to the height of the shelf support members 16, 17, 18, 19 of the trolley 9 illustrated in Fig. 1. The sheet of permeable material 40 is formed from a fine but robust nylon or polypropylene netting having a hole size of about 3mm. At either end of the sheet 40 there is provided securing means in the form of first and second securing elements 31, 32 of a zip, for securing the two ends of the sheet 40 together when the sheet 40 is wrapped around the trolley 9. The zip is configured so that in use the two securing elements 31, 32 may be joined at the uppermost parts thereof and successively joined along their lengths. Providing a securing means that fastens from the top downwards rather than from the bottom upwards greatly facilitates fitting of the device onto a trolley and allows access to the lower shelves of the trolley with the zip partially fastened and the device thus secured to the trolley.

The sheet 40 is further divided into five panels by first, second, third and fourth reinforcing members in the form of lengths of webbing 33, 34, 35, 36, which run across the width of the sheet 40 and are attached to the sheet along their lengths. The five panels comprise a first front panel 41 extending between the first securing element 31 and the first reinforcing member 33, a second front panel 42 extending between the second securing element 32 and the fourth reinforcing member 36, a first side panel 43 extending between the first and second reinforcing members 33, 34, a second side panel 44 extending between the third and fourth reinforcing members 35, 36 and a rear panel 45 extending between the second and third reinforcing members 34, 35. A first aperture 46 is provided in the first side panel 43, adjacent to the second reinforcing member 34 and a second aperture 47 is provided in the rear panel 45 adjacent to the second reinforcing member 34 and close to the first aperture 46. Similarly, third and fourth apertures 48, 49 are provided in the rear panel 45 and the second side panel 44, adjacent to the third reinforcing member 35.

In use, in order to protect the plants on a plant trolley 9, the plant protection device 30 is placed so that the second and third reinforcing members 34, 35 are respectively adjacent to the third and second shelf support members 18, 17 of a trolley 5. The plant protection device 30 is then wrapped around the trolley 9 such that the first reinforcing member 33 is placed adjacent to the fourth shelf support member 19 and the third reinforcing member 36 is placed adjacent to the first shelf support member 16. The first and second securing elements 31, 32 are pulled together and coupled together between the first and fourth shelf support members 16, 19 of the trolley 9. Thus, plants placed upon the trolley 9 are substantially constrained to within the perimeter of the trolley, whilst, because of the air permeable nature of the sheet 40, there is no danger of the plants being unable to breathe. The second and third shelf support members 17, 18 of the trolley are accessible through the four apertures 46, 47, 48, 49 and the trolley may be manually steered by means of the shelf support members 17, 18. As the first and second securing elements 31, 32 are drawn together there is an intrinsic tendency for the tops of the four shelf support members 33, 34, 35, 36 to curl over the tops of the four shelf support members 16, 17, 18, 19 thus preventing the plant protection device 9 from sliding down the shelf support members in use.

The described embodiment thus provides a device for the protection of plants which protects plants, constraining them substantially to inside the perimeter of a trolley whilst allowing them to breathe. Furthermore, the device 30, being made from a sheet 40 of relatively closely woven plastics material such as nylon, is robust in use and therefore re-useable. A recyclable plastics material may be used enabling the device to be reprocessed at the end of its life. The reinforcing members 33, 34, 35, 36 are preferably made from a robust webbing material to prevent damage to the sheet 40 where the panel would be most vulnerable, that is, at the corners of the trolley. Other plastics or textile materials may be used to form the reinforcing members. The first and second securing elements 31, 32 allow the plant protection device 30 to be fitted or removed from the trolley 9 with ease and also allow repeated use of the plant protection device since the zip may be used to repeatedly secure and release the device.

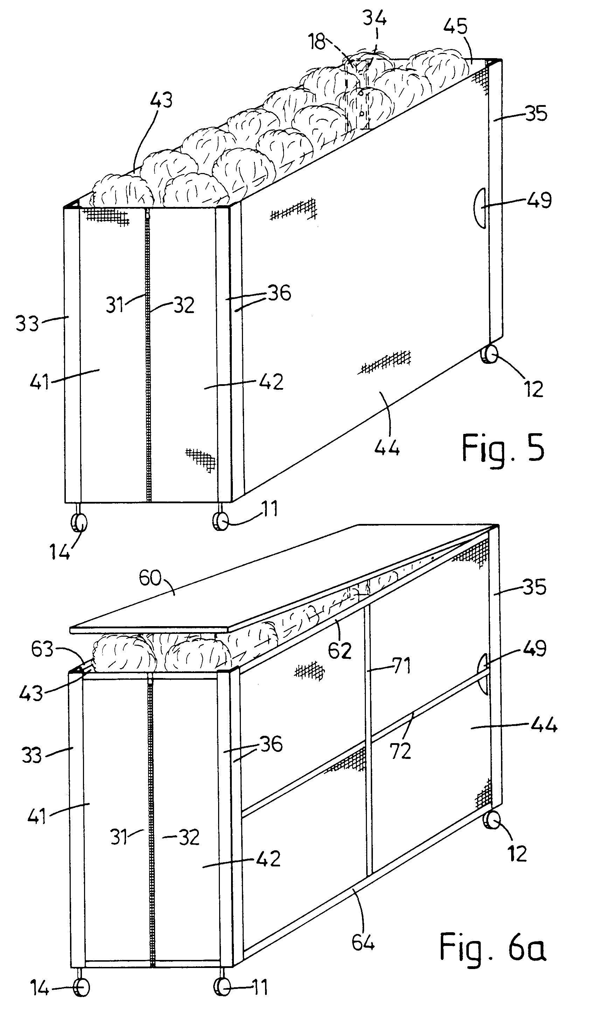

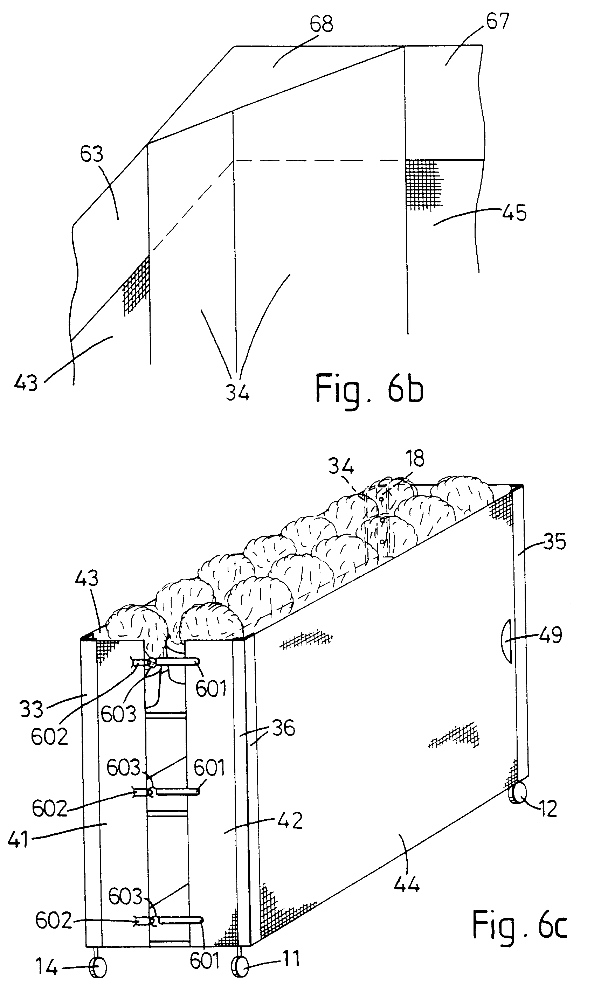

Various possible modifications of the device for the protection of plants are envisaged and some possible variations are illustrated in Figs. 6a, 6b and 6c in which elements common to the other drawings are denoted by the same reference numerals. For example, additional sheet reinforcing members 62, 63, 64 may be provided along the long edges of the panels in order to provide additional robustness along the top and bottom edges of the sheet 40. Reinforcing members 71,72, for example of webbing, may also be provided on one or more of the panels. Support portions in the form of hooks may be provided at the upper ends of the reinforcing members 33, 34, 35, 36 in order to attach them to the tops of the shelf support members 16, 17, 18, 19. Alternatively the device may be provided with support portions in the form of members which extend across the tops of the corners thereof in order to enable the device to be set onto the tops of the shelf support members before fastening. An embodiment of such an arrangement is illustrated in Fig. 6b in which a triangular member 68 in the form of a suitably shaped piece of webbing is attached to the second reinforcing member 34 (which is located between the first side panel 43 and the rear panel 45) so as to extend, in use, across the top of the corner of the device between the first side panel 43 and the rear panel 45. The triangular member 68 may be formed as part of the webbing reinforcement member 34, or may be formed separately and then attached by stitching, gluing or some other suitable means. In Fig. 6b it can be seen that the first side panel 43 is provided with an upper reinforcing member 63 and the rear panel 45 is provided with an upper reinforcing member 67. These upper reinforcing members 63, 67 are not necessary for provision of the triangular member 68 but do enhance the robustness of the device. Functionally similar members of other shapes may be used, and other types of support portion, such as members contoured to fit over the tops of the shelf support members, are possible. As another alternative, a draw string may be provided.

Some plant trolleys are adapted to be stackable such that the tops of the shelf support members of a first trolley engage complementary portions at the bottom of a second similar trolley. A device for the protection of plants for use with such a trolley could be provided with support portions adapted to engage the shelf support members so as to help support the device without preventing stacking of the trolleys. For example, such a support portion might be configured so as to securely engage both the top of a shelf support member and the complementary portion, might be provided with an aperture in order to allow these elements to engage, or might be made small in size so as not to interfere with the engagement.

Air permeable materials other than fine nylon or polypropylene netting could, of course, be used to form the sheet 40, but it is preferred to use netting made from a recyclable plastics material. Use of netting rather than cling film eliminates the problem of two or more protected trolleys sticking together, for example during loading or unloading. Hole sizes other than of the order of 3mm may be used but this grade of netting economically provides a high level of air permeability and robustness.

Reference to a sheet 40 of material is not intended to indicate that the device is necessarily formed from a single continuous length of material, as the device could equally be formed from two or more lengths of material joined so as to form a suitably sized sheet. In particular each panel may be formed from a separate length of material and the lengths connected by reinforcing members.

Securing means other than a zip or zip-like fastener could be used, such as the type of fastening material sold under the trade mark VELCRO. A further alternative is an embodiment in which the plant protection device does not completely enclose the trolley but in which, in use, a gap is left between the first and second front panels and securing means which extends across the gap is provided (see Fig. 6c). Such securing means may comprise a number of elasticly resilient fastening members 601 which are attached to one of the front panels 42 and are releasably attachable to respective fastening-member receiving portions 602 attached to the other front panel 41. A fastening member 601 might, for example, comprise a length of elastic rope with a hook 603 fitted at one end thereof and a corresponding receiving portion might comprise a loop 602 or aperture (not shown) adapted to receive the hook 603. In use therefore the fastening members could be stretched in order to allow fastening and then allowed to retract in order to tighten the device about a trolley. Alternatively, fastening members which are not elastically resilient but which may be adjusted by an operator may be used. Fastening members of this type may comprise webbing straps with known means for adjusting their length.

Fastening members as described above could also be used as a first securing mechanism in conjunction with an embodiment in which the first and second front panels are fastenable by a second securing mechanism such as a zip or VELCRO fastener. Such an embodiment could be easily and conveniently operated by first fastening the fastening members in order to position the device then tightening or allowing the fastening members to tighten in order to bring the first and second elements of the second securing means adjacent to each other, and then operating the second securing mechanism in order to secure the device. In addition to facilitating fitting of the device the use of two separate securing mechanisms and would allow continued use of the device even if one or other of the securing mechanisms became damaged or inoperable.

The embodiment of Figs. 3 to 5 comprises panels adapted to protect the plants on the trolley from the four sides of the trolley but does not provide a panel adapted to protect the plants on the trolley from above. This is because it is assumed that plants may be transported on the trolley which extend to above the height of the tops of the four shelf support members 16, 17, 18, 19. If desired an additional top panel could, of course, be provided without departing from the scope of the invention and such a panel could be separate from the sheet 40 or, as illustrated in Fig. 6a, a top panel 60 could be attached to the upper edge of one or more of the panels. Such a top panel 60 could be releasably fastenable to the upper edges of one or more of the panels 41, 43, 44, 42 using zips or other fastening means. Alternatively, the top panel could be permanently attached, for example by stitching, to the rear panel 45 and the first and second side panels 43, 44 and provided with temporary fastening means for fastening said top panel to the first and/or second front panels 41, 42. Embodiments of devices for the protection of plants in accordance with the present invention may be adapted for use with types of plant trolleys other than that specifically described.

## Claims

1. A device for use in protecting plants during transportation on a trolley, said device comprising a sheet of material (40), said sheet having repeatably operable securing means (31, 32) comprising a first securing means (31) located at or adjacent a first edge thereof and a second securing means (31) located at or adjacent a second, opposite, edge thereof
characterised in that:
said sheet (40) is substantially rectangular and is adapted to extend around a plant trolley and be secured thereon by said securing means (31, 32); and
said sheet includes at least one air permeable portion.

2. A device as claimed in Claim 1 wherein said securing means (31, 32) comprises a zip fastener or multiple-hook multiple-loop fastener.

3. A device as claimed in either preceding claim wherein said securing means comprises a number of elongate fastening members (601) attached to said sheet at or adjacent said first edge thereof, adapted to be releasably attached to respective fastening-member receiving portions (602) attached to said sheet at or adjacent said second edge thereof.

4. A device as claimed in Claim 3 wherein each of said fastening members (601) is operable after attachment to its respective fastening-member receiving portion (602) so as to force said first and second edges of said sheet towards each other.

5. A device as claimed in any preceding claim wherein said securing means is adapted, in use, to be operable from the upper portion thereof successively towards a lower portion thereof.

6. A device as claimed in any preceding claim wherein said sheet is formed primarily from an air permeable material.

7. A device as claimed in any preceding claim wherein said sheet is divided into a number of panels (41, 42, 43, 44, 45) by reinforcing members (33, 34, 35, 36) provided thereon.

8. A device as claimed in Claim 7 wherein said reinforcing members are in the form of strips which are made from a webbing, textile or plastics material.

9. A device as claimed in either of Claims 7 or 8 wherein said reinforcing members are adapted, in use, to be located adjacent the corners of a trolley upon which said device is secured.

10. A device as claimed in any preceding claim wherein there are provided sheet reinforcing members (63, 64) adapted to be substantially horizontal in use and adapted, in use, to reinforce the top and/or bottom edges of said sheet.

11. A device as claimed in any of Claims 7 to 10 wherein there are provided additional reinforcing members (71, 72) to reinforce said sheet.

12. A device as claimed in any preceding claim wherein there is provided at least one support portion (68) which is adapted to extend over an upper portion of a plant trolley and preferably over the top of a shelf support member of a plant trolley.

13. A device as claimed in Claim 12 when dependent upon Claim 7 or any claim dependent thereon, wherein said support portion comprises a member which, in use, extends between two substantially perpendicular panels of said sheet.

14. A device as claimed in Claim 13 or Claim 12 when dependent upon Claim 7 wherein said at least one support portion (68) is attached to a reinforcing member (33, 34, 35, 36).

15. A device as claimed in any preceding claim wherein there are provided apertures (46, 47, 48, 49) in said sheet in order to allow access to a trolley upon which said device is secured.

16. A device as claimed in Claim 2 or any claim dependent thereon wherein said air permeable portion of said sheet is made of a plastics material, preferably, of nylon or polypropylene.

17. A device as claimed in Claim 2 or any claim dependent thereon wherein said air permeable portion of said sheet is made of a net-like material.

## Patentansprüche

1. Eine Vorrichtung zum Schützen von Pflanzen während dem Transport auf einem Wagen, wobei die Vorrichtung aus einer dünnen Materialschicht (40) besteht, wobei die Schicht wiederholbar betätigbare Befestigungsmittel (31, 32) aufweist, die aus einem ersten an oder in der Nähe einer ersten Kante befindlichen Befestigungsmittel (31) und einem zweiten an oder in der Nähe einer zweiten gegenüberliegenden Kante befindlichen Befestigungsmittel (32) bestehen, dadurch
gekennzeichnet, daß:
die Schicht (40) im wesentlichen rechteckig ist und ausgelegt ist, um sich um einen Pflanzenwagen zu erstrecken und mittels der Befestigungsmittel (31, 32) befestigt zu werden; und
diese Schicht beinhaltet zumindest einen luftdurchlässigen Teil.

2. Vorrichtung gemäß Anspruch 1, wobei das Befestigungsmittel (31, 32) einen Reißverschluß oder einen Verschluß mit mehreren Haken und mehreren Maschen umfaßt.

3. Vorrichtung gemäß einem der vorhergehenden Ansprüche, wobei das Befestigungsmittel eine Reihe von länglichen Verschlußteilen (601) umfaßt, die an oder in der Nähe der ersten Kante an der Schicht angebracht sind und ausgelegt sind, um lösbar an dem jeweiligen Verschlußteilempfangsteil (602), der an oder in der Nähe der zweiten Kante an der Schicht angebracht ist, angebracht zu werden.

4. Vorrichtung gemäß Anspruch 3, wobei die Verschlußteile (601) jeweils nach Anbringen an den jeweiligen Verschlußteilempfangsteilen (602) betriebsfertig sind, um die erste und die zweite Kante der Schicht aneinanderzuzwingen.

5. Vorrichtung gemäß einem der vorhergehenden Ansprüche, wobei das Befestigungsmittel ausgelegt ist, um während des Gebrauchs sukzessive von dem oberen Teil zu einem unteren Teil betriebsfertig zu sein.

6. Vorrichtung gemäß einem der vorhergehenden Ansprüche, wobei die Schicht hauptsächlich aus luftdurchlässigem Material gebildet wird.

7. Vorrichtung gemäß einem der vorhergehenden Ansprüche, wobei die Schicht durch darauf bereitgestellte Verstärkungsteile (33, 34, 35, 36) in eine Reihe von Platten (41, 42, 43, 44, 45) unterteilt ist.

8. Vorrichtung gemäß Anspruch 7, wobei die Verstärkungsteile die Form von Streifen aus Gurtband, Stoff, oder Kunststoff haben.

9. Vorrichtung gemäß Anspruch 7 oder 8, wobei die Verstärkungsteile ausgelegt sind, um bei Gebrauch in der Nähe der Ecken auf einem Wagen, auf dem die Vorrichtung befestigt ist, angebracht zu werden.

10. Vorrichtung gemäß einem der vorhergehenden Ansprüche, wobei Schichtverstärkungsteile (63, 64) bereitgestellt werden, die ausgelegt sind, um bei Gebrauch im wesentlichen waagerecht zu sein und die ausgelegt sind, um bei Gebrauch die oberen und/oder die unteren Kanten der Schicht zu verstärken.

11. Vorrichtung gemäß einem der Ansprüche 7 bis 10, wobei zusätzliche Verstärkungsteile (71, 72) bereitgestellt werden, um die Schicht zu verstärken.

12. Vorrichtung gemäß einem der vorhergehenden Ansprüche, wobei zumindest ein Stützteil (68) bereitgestellt wird, der ausgelegt ist, um sich über einen oberen Teil eines Pflanzenwagens und vorzugsweise über den obersten Teil eines Regalstützteils eines Pflanzenwagens zu erstrecken.

13. Vorrichtung gemäß Anspruch 12 wenn in Abhängigkeit von Anspruch 7 oder jedwedem davon abhängigem Anspruch, wobei der Stützteil einen Teil umfaßt, der sich bei Gebrauch zwischen zwei im wesentlichen senkrechten Platten der Schicht erstreckt.

14. Vorrichtung gemäß Anspruch 13 oder Anspruch 12 wenn in Abhängigkeit von Anspruch 7, wobei der zumindest eine Stützteil (68) an einem Verstärkungsteil (33, 34, 35, 36) angebracht wird.

15. Vorrichtung gemäß einem der vorhergehenden Ansprüche, wobei Öffnungen (46, 47, 48, 49) in der Schicht bereitgestellt werden, um einen Zugang zu dem Wagen, auf dem die Vorrichtung befestigt ist, zu ermöglichen.

16. Vorrichtung gemäß Anspruch 2 oder jedwedem davon abhängigem Anspruch, wobei der luftdurchlässige Teil der Schicht aus Kunststoff, vorzugsweise Nylon oder Polypropylen ist.

17. Vorrichtung gemäß Anspruch 2 oder jedwedem davon abhängigem Anspruch, wobei der luftdurchlässige Teil der Schicht aus einem netzartigen Material ist.

## Revendications

1. Un dispositif utilisé pour protéger des plantes durant leur transport sur un chariot, ledit dispositif comprenant une feuille de matériau (40), ladite feuille comportant des moyens de fixation que l'on peut faire fonctionner à plusieurs reprises (31, 32) comprenant un premier moyen de fixation (31) situé sur ou adjacent à son premier bord et un second moyen de fixation (32) situé sur ou adjacent à son second bord, à l'opposé, caractérisé en ce que:
ladite feuille (40) est sensiblement rectangulaire et est adaptée pour envelopper un chariot de plantes et y être fixée par lesdits moyens de fixation (31, 32); et
ladite feuille comprend au moins une portion perméable à l'air.

2. Un dispositif selon la revendication 1 dans lequel lesdits moyens de fixation (31, 32) comprennent une fermeture éclair ou une fermeture à crochets et à boucles multiples.

3. Un dispositif selon l'une quelconque des revendications précédentes dans lequel lesdits moyens de fixation comprennent plusieurs éléments de fermeture allongés (601) fixés à ladite feuille sur ou adjacents au dit premier bord de la feuille, adaptés pour pouvoir être attachés de façon détachable à des portions respectives servant à recevoir les éléments de fermeture (602) fixées à ladite feuille sur ou adjacentes au dit second bord de la feuille.

4. Un dispositif selon la revendication 3 dans lequel chacun des dits éléments de fermeture (601) peut fonctionner après avoir été attaché à sa portion respective servant à recevoir les éléments de fermeture (602) de façon à tirer le premier et le second bord de ladite feuille l'un vers l'autre.

5. Un dispositif selon l'une quelconque des revendications précédentes dans lequel ledit moyen de fixation est adapté, à l'usage, pour pouvoir fonctionner de la portion supérieure successivement vers une portion inférieure du dispositif.

6. Un dispositif selon l'une quelconque des revendications précédentes dans lequel ladite feuille est formée à l'origine à partir d'un matériau perméable à l'air.

7. Un dispositif selon l'une quelconque des revendications précédentes dans lequel ladite feuille est divisée en plusieurs panneaux (41, 42, 43, 44, 45) par des éléments d'armature (33, 34, 35, 36) fournis sur le dispositif.

8. Un dispositif selon la revendication 7 dans lequel lesdits éléments d'armature sont en forme de bandes qui sont fabriquées à partir d'un matériau pour sangle textile ou plastique.

9. Un dispositif selon l'une quelconque des revendications 7 ou 8 dans lequel lesdits éléments d'armature sont adaptés, à l'usage, pour être situés de façon adjacente aux coins d'un chariot sur lequel est fixé ledit dispositif.

10. Un dispositif selon l'une quelconque des revendications précédentes dans lequel sont fournis des éléments d'armature de feuille (63, 64) adaptés pour être sensiblement horizontaux à l'usage et adaptés, à l'usage, pour renforcer les bords haut et/ou bas de ladite feuille.

11. Un dispositif selon l'une quelconque des revendications 7 à 10 dans lequel sont fournis des éléments d'armature supplémentaires (71, 72) pour renforcer ladite feuille.

12. Un dispositif selon l'une quelconque des revendications précédentes dans lequel est fournie au moins une portion de support (68) qui est adaptée pour recouvrir une portion supérieure d'un chariot de plantes et de préférence le sommet d'un élément de support d'étagère d'un chariot de plantes.

13. Un dispositif selon la revendication 12 lorsqu'elle dépend de la revendication 7 ou toute autre revendication qui en dépend, dans lequel ladite portion de support comprend un élément qui, à l'usage, s'étire entre deux panneaux sensiblement perpendiculaires de ladite feuille.

14. Un dispositif selon la revendication 13 ou la revendication 12 lorsqu'elles dépendent de la revendication 7 dans lequel au moins une dite portion de support (68) est fixée à un élément d'armature (33, 34, 35, 36).

15. Un dispositif selon l'une quelconque des revendications précédentes dans lequel sont fournies des ouvertures (46, 47, 48, 49) dans ladite feuille de façon à permettre d'accéder à un chariot sur lequel ledit dispositif est fixé.

16. Un dispositif selon la revendication 2 ou toute autre revendication qui en dépend dans lequel ladite portion perméable à l'air de ladite feuille est fabriquée à partir d'une matière plastique, de préférence, du nylon ou du polypropylène.

17. Un dispositif selon la revendication 2 ou toute autre revendication qui en dépend dans lequel ladite portion perméable à l'air de ladite feuille est fabriquée à partir d'un matériau similaire à un filet.
